Europäisches Patentamt

European Patent Office

Office européen des brevets

(19)

(11) Publication number: **0 114 368 B1**

(12) **EUROPEAN PATENT SPECIFICATION**

(45) Date of publication of patent specification: **24.04.91**  (51) Int. Cl.⁵: **G07F 7/10, H04L 9/00**

(21) Application number: **83112927.5**

(22) Date of filing: **21.12.83**

(54) Data protection system.

(30) Priority: **28.12.82 JP 233404/82**
**28.12.82 JP 233422/82**
**28.12.82 JP 233423/82**
**28.12.82 JP 233483/82**
**28.12.82 JP 233510/82**
**28.12.82 JP 233512/82**

(43) Date of publication of application:
**01.08.84 Bulletin 84/31**

(45) Publication of the grant of the patent:
**24.04.91 Bulletin 91/17**

(84) Designated Contracting States:
**DE FR GB**

(56) References cited:
**EP-A- 0 138 219      EP-A- 0 138 386**
**WO-A-82/02446      DE-A- 3 248 400**
**US-A- 4 215 421      US-A- 4 310 720**

**IBM TECHNICAL DISCLOSURE BULLETIN, vol. 16, no. 8, January 1974, pages 2539-2540, New York, US; C.D. CULLUM et al.: "Cryptographic password management system"**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Hirokawa, Katsuhisa**
**1-3-5, Shonantakatori**
**Yokosuka-shi Kanagawa-ken(JP)**
Inventor: **Ozaki, Hiroshi**
**28-201, Green-Heim-Izumino, 6205-1, Izumi-cho**
**Totsuka-ku Yokohama-shi(JP)**

(74) Representative: **Henkel, Feiler, Hänzel & Partner**
**Möhlstrasse 37**
**W-8000 München 80(DE)**

## Description

The present invention relates to a data protection system in a data transmission system between an on-line terminal (e.g., an automatic teller machine) and a bank center or between an off-line terminal and a bank center.

Conventionally, when on-line data transmission is performed between an automatic teller machine and a bank center, a sender encrypts data using a predetermined encryption key and a receiver decrypts the encrypted data using the decryption key.

However, all operators of such an automatic teller machine and bank center machine can know the encryption/decryption key, so that they can read any encrypted data. Thus, the security of the banking procedures performed may not be guaranteed. In order to ensure the security of the encryption/decryption operation, the key must be changed for each individual operator. However, such a procedure cannot be performed in practice.

Prior art document WO-A-82 02 446 discloses a dispositif which allows the identification, authentication and optionally the encryption of information exchanges between legitimate carriers of credit devices and remote centralized processing machines via specific terminals. The information produced by a carrier of a credit device, after connection of the device to a terminal and sending the identity of such credit device, is authenticated by a key-digit produced by a generating logic of the credit device from an individualization key and transaction data. In this dispositif a key code input through a keyboard in the credit device is encrypted by a fixed encrypting factor, and then transferred to a centralized processing machine. The centralized processing machine receives and decrypts the encrypted key code to know which credit device is used and who is using. If the key code is valid, the centralized processing machine sends an access permission signal to the credit device. The encrypting key is fixed, and the terminal has the same decrypting key as that of the credit device. An object to be encrypted is not formed by data to be processed such as a transaction data but rather identification information is encrypted. Furthermore, an encrypting block is fixed in the credit device.

It is an object of the present invention to provide a data protection system which enables a secure operation when data is transmitted from a terminal to a center on either an on- or off-line basis. The present invention provides a data protection system as defined in claim 1.

According to a first aspect of the present invention, encrypted data of a second storage medium is read and compared with encrypted data stored in a first storage medium. Data is read out from the first storage medium only when a coincidence is established.

According to a second aspect of the present invention, data from a terminal is encrypted in accordance with encryption key from a data storage medium. This encrypted data is transmitted to the center in accordance with the on- or off-line system. The encrypted data is decrypted at the center in accordance with the decryption key from the data storage medium.

According to a third aspect of the present invention, data from the data source is encrypted within a data processing medium having an encrypting program, and the encrypted data is transmitted to the center in accordance with the on- or off-line system. The encrypted data is decrypted, within a data processing medium having a decrypting program corresponding to the encrypting program at the center.

According to a fourth aspect of the present invention, data from a terminal is encrypted in accordance with an encrypting program from a data storage medium, and this encrypted data is transmitted to the center. The encrypted data is decrypted at the center in accordance with a decrypting program corresponding to the encrypted program.

According to a fifth aspect of the present invention, data format conversion is performed in accordance with a format conversion program from a data storage medium.

According to a sixth embodiment of the present invention, data format conversion is performed within a data processing medium having a format conversion program.

This invention can be more fully understood from the following detailed description when taken in conjunction with the accompanying drawings, in which:

Fig. 1 is a perspective view of a data conversion apparatus;

Fig. 2 is a block diagram showing the internal configuration of the data conversion apparatus;

Fig. 3 is a plane view showing the layout of an IC card;

Fig. 4 is a block diagram of an IC chip;

Fig. 5 is a block diagram of a read/write section on the IC card; and

Fig. 6 is a block diagram showing the schematic configuration of a personal computer.

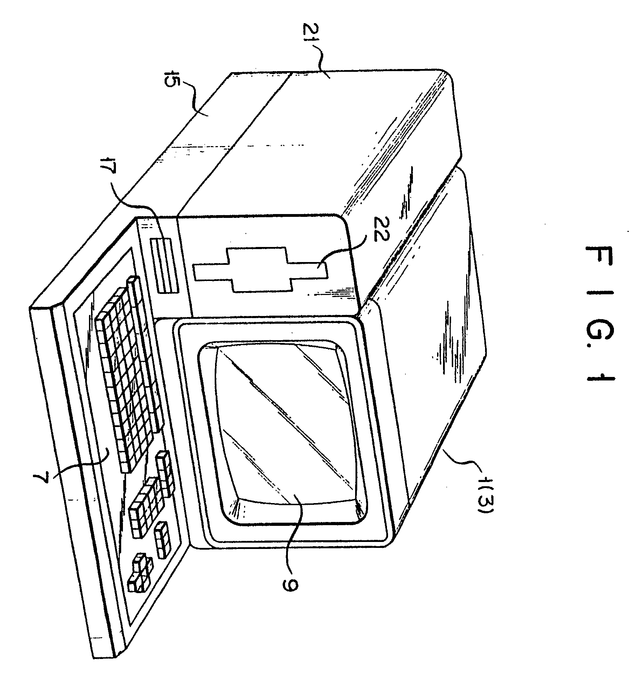

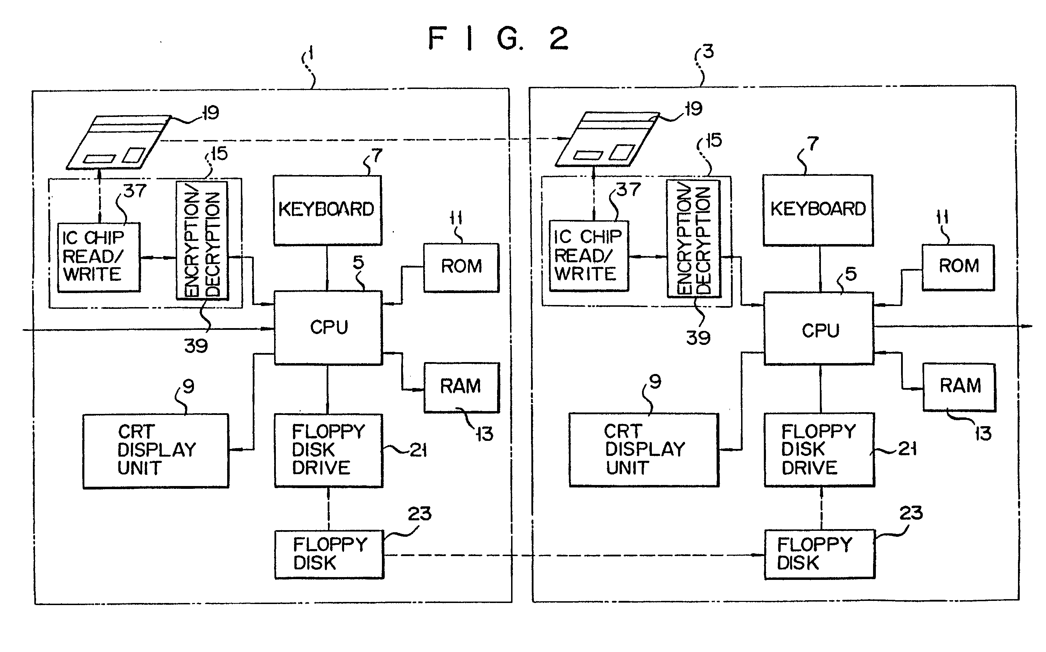

Referring to Figs. 1 and 2, reference numeral 1 denotes a data conversion apparatus connected to an automatic teller machine (not shown) installed at a company; and 3, a data conversion apparatus connected to a bank center (not shown). The data conversion apparatus 1 converts transaction data, supplied from the automatic teller machine, into encrypted data. The encrypted data is stored in a first storage medium, e.g., a floppy disk 23 to be described later. Each data conversion apparatus comprises: a central processing unit (CPU) 5 for controlling the entirety of the data conversion apparatus; a keyboard 7 used for entering a confidential ID number or the like; a CRT display unit 9; a read-only memory (ROM) 11 for storing a program to control the CPU 5; a random access memory (RAM) 13 for storing data; an IC card read/write section 15 for reading/writing data from and to an IC chip (CPU chip) embedded in an IC card (second storage medium) 19 inserted at a card insertion port 17; and a floppy disk drive 21 for reading/writing data with respect to a floppy disk or diskette (first storage medium) 23 inserted at a floppy disk insertion port 22. The CPU 5 encrypts a password read from the IC card 19 supplied from the IC card read/write section 15, and also the transaction data from the automatic teller machine (not shown). The encrypted data are stored in the floppy disk 23. A typical encryption scheme is known as the Data Encryption Standard (DES). The IC card 19 has a magnetic stripe 25 and an IC chip section 27 thereon. The IC chip section 27 comprises a control CPU 29, a RON 31 for storing control program, confidential ID number and password, a data storage RAM 33 and a contacting portion 35.

The IC card read/write section 15 comprises: an IC chip reader/writer (IC chip read/write unit) 37 which is brought into contact with the contacting portion 35 of the IC chip section 27 on the IC card 19 so as to read out data from the ROM 31 and the RAM 33 and write data in the RAM 33; and an encryption/decryption circuit 39 for encrypting data from the CPU 5 and decrypting data from the IC chip reader/writer 37 and writing it in the CPU 5.

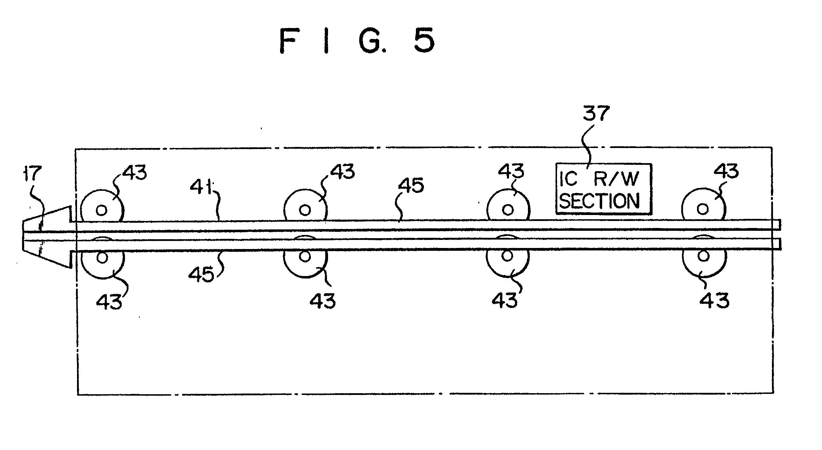

The IC card reader/writer 37 has an arrangement as shown in Fig. 5. A convey path 41 is disposed to convey the IC card 19 inserted at the card insertion port 17. A plurality of pairs of convey rollers 43 are disposed along the convey path 41 so as to clamp the IC card 19 therebetween. The convey rollers 43 are disposed to be spaced apart at equal intervals along the convey path 41. The pitch between the centers of each two adjacent rollers along the convey direction corresponds to the width of the IC card, so that the IC card 19 can be smoothly moved along the convey path 41. The convey path 41 is defined by a convey guide 45. The reader/writer 37 is disposed on the convey guide 45.

The data conversion apparatus 3 has the same configuration as that of the data conversion apparatus 1, and a detailed description thereof will be omitted.

The operation of an first embodiment of the data conversion apparatus will now be described.

When the operator inserts the IC card 19 at the card insertion port 17, the IC card 19 is taken into the IC card read/write section 15. The contacting portion 35 of the IC chip section 27 is brought into electrical contact with the IC chip reader/writer 37, so that the IC chip reader/writer 37 reads out the confidential ID number and the password from the ROM 31 in the IC chip section 27. An output from the IC chip reader/writer 37 is supplied to the CPU 5 through the encryption/decryption circuit 39. The operator types the confidential ID number at the keyboard 7. The CPU 5 compares the confidential ID number from the keyboard 7 with that from the ROM 31 of the IC chip section 27. When these data coincide, the CPU 5 determines that the proper IC card 19 has been inserted by the proper operator. The CPU 5 causes the encryption/decryption circuit 39 to encrypt the transaction data and the password from the automatic teller machine (not shown). The encrypted data from the circuit 39 are sequentially stored on the floppy disk 23 in the floppy disk drive 21.

The floppy disk 23 which stores this transaction data and the IC card 19 used therefor are physically transported by the operator to a location whereat the data conversion apparatus 3 connected to a bank center (not shown) is installed. The operator who transports the floppy disk 23 and the IC card 19 inserts the IC card 19 at the card insertion port 17 of the data conversion apparatus and the floppy disk 23 at the floppy disk insertion port 22. The IC card 19 is taken into the card read/write section 15, so that the contacting portion 35 of the IC chip section 27 is brought into electrical contact with the IC chip reader/writer 37. The reader/writer 37 reads the confidential ID number and the password from the ROM 31 in the IC chip section 27. The outputs from the IC chip reader/writer 37 are supplied to the CPU 5 through the encryption/decryption circuit 39. The floppy disk drive 21 sequentially reads out the transaction data and the password (encrypted data) from the floppy disk 23, and the readout data are fetched by the CPU 5. The operator then types the confidential ID number at the keyboard 7. The CPU 5 compares the confidential ID number from the keyboard 7 with that read from the ROM 31 of the IC chip section 27. When a coincidence is established, the CPU 5 determines that the proper IC card has been inserted by the proper operator. The CPU 5 supplies encrypted data from the floppy disk drive 21 to the encryption/decryption circuit 39. The CPU 5 compares the decrypted password with that from the ROM 31 of the IC chip section 27. When a coincidence is established, the CPU 5 determines that the IC card 19 properly corresponds to the floppy disk 23. Therefore, the CPU 5 transmits the decrypted transaction data to the center (not shown).

In this manner, data exchange using the floppy disk (i.e., off-line storage medium) is properly performed, and data on the floppy disk can be properly managed in accordance with the proper IC card of the proper operator, thereby guaranteeing the security of the transaction data. Furthermore, when the IC card is inserted, it is checked whether or not the confidential ID number from the IC card coincides with that from the keyboard. When the coincidence is established, it is confirmed that the operator is the proper operator, thereby guaranteeing the operator. Furthermore, the validity of the floppy disk can be assured.

The mode of operation according to a second embodiment of the present invention will be described hereinafter. An operator inserts the IC card 19 at the card insertion port 17 in the data conversion apparatus 1. The IC card is conveyed into the card read/write section 15. The contacting portion 35 of the IC chip section 27 is brought into electrical contact with the IC chip reader/writer 37. The IC chip reader/writer 37 reads out the confidential ID number and the encryption key from the ROM 31 of the IC chip section 27. Outputs from the IC chip reader/writer 37 are supplied to the CPU 5 through the encryption/decryption circuit 39. The operator types the confidential ID number for the possessor of the IC card 19. The CPU 5 compares the confidential ID number from the keyboard 7 with that from the ROM 31 of the IC chip section 27. When a coincidence is established, the CPU 5 determines that the proper IC card 19 is inserted by the proper operator. The CPU 5 supplies transaction data from the automatic teller machine (not shown) to the encryption/decryption circuit 39 in accordance with the encryption key supplied from the IC chip reader/writer 37. The encrypted data are sequentially stored on the floppy disk 23 in the floppy disk drive 21.

The floppy disk 23 which stores the transaction data and the IC card 19 used therefor are transported to a location whereat the data conversion apparatus 3 connected to the center (not shown) is installed.

The operator, who carries the floppy disk 23 and the IC card 19, inserts the IC card 19 at the card insertion port 17 in the data conversion apparatus 3 and the floppy disk 23 at the floppy disk insertion port 22. As a result, the IC card 19 is conveyed into the card read/write section 15, so that the contacting portion 35 of the IC chip section 27 is brought into electrical contact with the IC chip reader/writer 37. The reader/writer 37 reads out the confidential ID number and the decryption key from the ROM 31 of the IC card 19. Outputs from the IC chip reader/writer 37 are supplied to the CPU 5 through the encryption/decryption circuit 39. Meanwhile, the floppy disk drive 21 sequentially reads out the transaction data (encrypted data) on the floppy disk 23. The operator then types the confidential ID number indicating the operator of the IC card 19. The CPU 5 compares the confidential ID number from the keyboard 7 with that read out from the ROM 31 in the IC chip section 27. When a coincidence is established, the CPU 5 determines that the IC card is inserted by the proper operator. The CPU 5 supplies the encrypted data from the floppy disk drive 21 to the encryption/decryption circuit 39. The decrypted transaction data are then supplied to the center (not shown).

A third embodiment of the present invention will be described. The operator inserts the IC card 19 at the card insertion port 17 in the data conversion apparatus 1. The IC card 19 is conveyed into the card read/write section 15, so that the contacting portion of the IC chip section 27 is brought into electrical contact with the IC chip reader/writer 37. The IC chip reader/writer 37 reads out the confidential ID number stored in the RON 31 of the IC chip section 27. An output from the IC chip reader/writer 37 is supplied to the CPU 5. The operator then types the confidential ID number indicating the operator of the IC card 19 at the keyboard 7. The CPU 5 compares the confidential ID number from the keyboard 7 with that read out from the ROM 31 of the IC chip section 27. When a coincidence is established, the CPU 5 determines that the IC card 19 has been inserted by the proper operator. The CPU 5 supplies the transaction data from the automatic teller machine (not shown) to the control CPU 29 of the IC chip section 27 through the IC card read/write section 15. The control CPU 29 encrypts the data in accordance with the encrypting program stored in the ROM 31. The encrypted data is fetched by the CPU 5 through the IC card read/write section 15. The CPU 5 subsequently stores the encrypted data on the floppy disk 23 in the floppy disk drive 21.

The floppy disk 23 which stores the transaction data and the IC card 19 used therefor are transported to a location whereat the data conversion apparatus 3 connected to the center (not shown) is installed. The carrier (operator) of the floppy disk 23 and the IC card 19 inserts the IC card 19 at the card insertion port 17 in the data conversion apparatus 3 and the floppy disk 23 at the floppy disk insertion port 22. The IC card 19 is conveyed into the IC card read/write section 15, so that the contacting portion 35 of the IC chip section 27 is brought into electrical contact with the IC card reader/writer 37. The IC card reader/writer 37 of the IC card read/write section 15 reads out the confidential ID number stored in the ROM 31 of the IC chip section 27. The readout data is supplied to the CPU 5. The floppy disk drive 21 sequentially reads out the transaction data (encrypted data) on the floppy disk 23 and supplies it to the CPU 5. The operator types the confidential ID number indicating the operator of the IC card 19 at the keyboard 7. The CPU 5 then compares the confidential ID number from the keyboard 7 with that from the ROM 31 in the IC chip section 27. When a coincidence is established, the CPU 5 determines that the proper IC card 19 has been inserted by the proper operator. The CPU 5 supplies the encrypted data from the floppy disk drive 21 to the control CPU 29 of the IC chip section 27 through the IC card read/write section 15. The control CPU 29 decrypts the encrypted data in accordance with the decrypting program. The decrypted data is transmitted to the CPU 5 through the IC card read/write section 15. The CPU 5 supplies the decrypted transaction data to the center (not shown).

A fourth embodiment of the present invention will be described. The operator inserts the IC card 19 at the card insertion port 17 of the data conversion apparatus 1. The IC card 19 is conveyed into the card read/write section 15, so that the contacting portion 35 of the IC chip section 27 is brought into electrical contact with the IC chip reader/writer 37. The IC chip reader/writer 37 reads out the confidential ID number and the encrypting program from the ROM 31 of the IC chip section 27. Outputs from the IC chip reader/writer 37 are supplied to the CPU 5 through the encryption/decryption circuit 39. The operator types the confidential ID number indicating the operator of the IC card 19 at the keyboard 7. The CPU 5 compares the confidential ID number from the keyboard 7 with that read out from the ROM 31. When a coincidence is established, the CPU 5 determines that the IC card 19 has been inserted by the proper operator. The CPU 5 encrypts the transaction data from the automatic teller machine in accordance with the encrypting program supplied from the IC chip reader/writer 37. The encrypted data are sequentially stored in the floppy disk 23 in the floppy disk drive 21.

The floppy disk 23 which stores the transaction data and the IC card 19 therefor are transported to a location whereat the data conversion apparatus 3 connected to the center (not shown) is installed. The carrier (operator) of the floppy disk 23 and the IC card 19 inserts the IC card 19 at the card insertion port 17 of the data conversion apparatus 3 and the floppy disk 23 at the floppy disk insertion port 22. The IC card 19 is conveyed into the card read/write section 15, so that the contacting portion 35 of the IC chip section 27 is brought into electrical contact with the IC chip reader/writer 37. The IC chip reader/writer 37 reads out the confidential ID number and the decrypting program from the ROM 31 of the IC chip section 27. Outputs from the IC chip reader/writer 37 are decrypted by the encryption/decryption circuit 39, and the decrypted data are supplied to the CPU 5. The floppy disk unit 21 sequentially reads transaction data (encrypted data) from the floppy disk 23, and supplies the data to the CPU 5. The operator types the confidential ID number indicating the operator of the IC card 19 at the keyboard 7. The CPU 5 compares the confidential ID number from the keyboard 7 with that read out from the ROM 31 of the IC chip section 27. When a coincidence is established, the CPU 5 determines that the IC card has been inserted by the proper operator. The CPU 5 decrypts the encrypted data supplied from the floppy disk drive 21 in accordance with the decrypting program. The decrypted transaction data is transmitted to the center (not shown). The fourth embodiment can provide the same effect as the first to third embodiments.

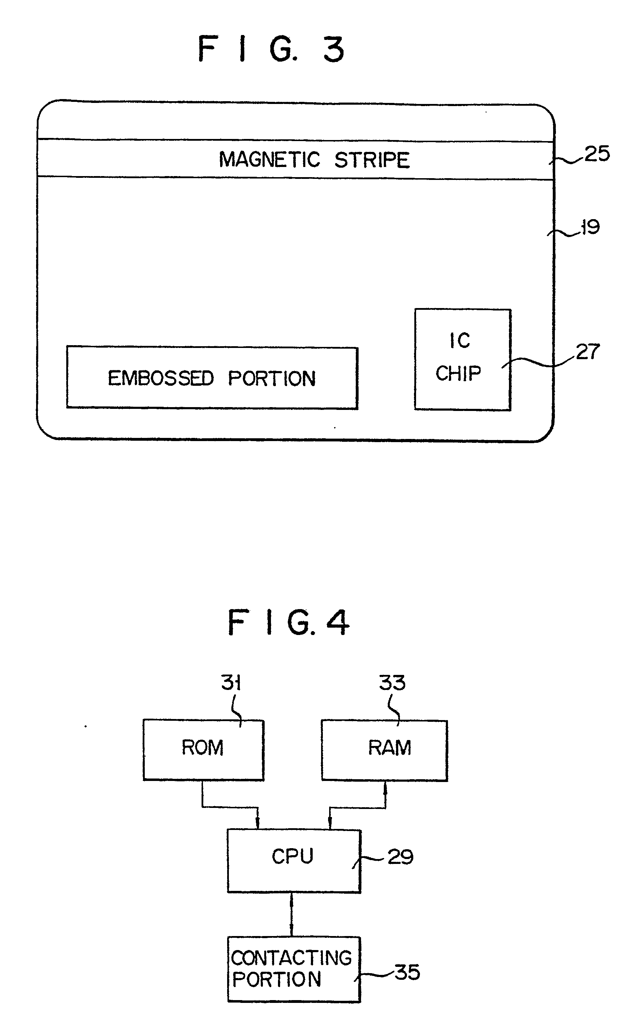

The floppy disk is used as the off-line storage medium in the above embodiments. However, the off-line storage medium is not limited to this, but may be extended to include a magnetic tape, a magnetic disk, an optical disk or the like. Data transmission between an automatic teller machine and a center has been described. However, it is only essential to perform data transmission between at least two types of equipment. Furthermore, the IC card in Fig. 4 is used as the second data storage medium in the above embodiments. However, the second data storage medium is not limited to this, but may be extended to include an IC card with a programmable read only memory, a passbook or laser card in which an IC chip is embedded.

A fifth embodiment of the present invention will be described hereinafter. In the first to fourth embodiments, the data conversion apparatus connected to the automatic teller machine is illustrated in Fig. 1. However, the data conversion apparatus may be replaced with a personal computer. The fifth embodiment and a sixth embodiment to be described later respectively employ microcomputers as personal computers.

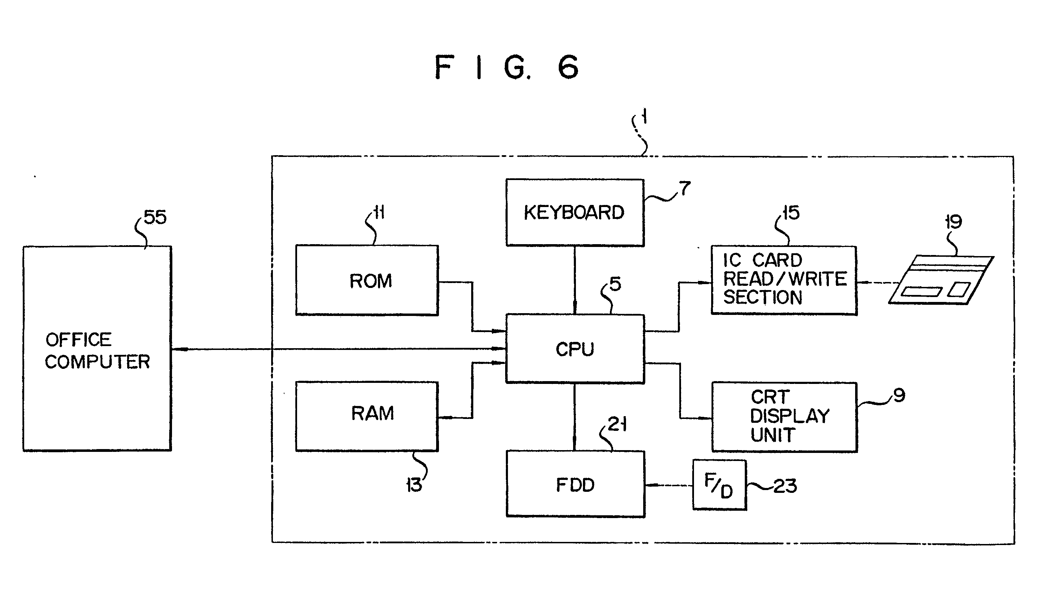

A personal computer 1 as shown in Fig. 6 comprises: a CPU 5 for controlling the overall operation; a keyboard 7 used to enter data; a CRT display unit 9, a ROM 11 for storing a control program; a RAM 13 for storing data; a floppy disk drive 21 for reading/writing data with respect to a floppy disk 23 inserted at a floppy disk insertion port 22; an IC card read/write section 15 for writing data from the CPU 5 in a second data storage medium (e.g., an IC card 19 inserted at the card insertion port 17) or reading data therefrom by bringing a contacting portion 35 of an IC chip section 27 into electrical contact with the IC card 19; and so on.

The CPU 5 converts data supplied from an external device (e.g., an office computer 55) into a given format in accordance with a format conversion program read from the IC card 19 supplied from the IC card read/write section 15. Data processing is performed in accordance with the data having the given format. Alternatively, the processed data is converted to have a format used for the office computer 55 in accordance with the format conversion program. The converted data is supplied to the office computer 55. The above data conversion is performed between an ASCII code and another type of code, for example. The IC card 19 and the IC card read/write section 15 have the same arrangement as in the previous embodiments, and a detailed description thereof will be omitted.

The conversion system will be described. Assume that the personal computer 1 is connected to the office computer 55, and that the IC card 19 having the corresponding format conversion program is inserted at the card insertion port 17. The IC card 19 is conveyed into the card read/write section 15, so that the contacting portion 35 of the IC chip section 27 is brought into electrical contact with the IC chip reader/writer 37. The IC chip reader/writer 37 reads the format conversion program from the ROM 31 of the IC chip section 27. The CPU 5 stores the format conversion program in the RAM 13.

In this state, when data is supplied from the office computer 55 to the CPU 5, the CPU 5 converts the format to the personal computer format in accordance with the format conversion program stored in the RAM 13, and processes the data in accordance with given processing.

When data is to be exchanged between devices having a plurality of formats, a corresponding IC card is inserted to obtain the same effect as described above.

Another conversion system will be described. For example, the personal computer 1 is connected to the office computer 55, and the IC card 19 having the corresponding format conversion program is inserted at the card insertion port 17. The IC card 19 is conveyed into the card read/write section 15, so that the contacting portion 35 of the IC chip section 27 is brought into electrical contact with the IC chip reader/writer 37.

In this state, when data is supplied from the office computer 55 to the CPU 5, the CPU 5 supplies the data to the CPU 29 of the IC chip section 27 through the IC card read/write section 15. The CPU 29 converts the input data to the personal computer format in accordance with the format conversion program stored in the ROM 31. The converted data is supplied to the CPU 5 through the IC card read/write section 15. Therefore, the CPU 5 can perform predetermined processing in accordance with the data from the CPU 29.

On the other hand, when data is supplied from the personal computer 1 to the office computer 55, the CPU 5 supplies the data to the CPU 29 of the IC chip section 27 through the IC card read/write section 15. The CPU 29 converts the input data to the office computer format in accordance with the format conversion program stored in the ROM 31. The converted data is supplied to the office computer 55 through the IC card read/write section 15 and the CPU 5. Therefore, the office computer can perform predetermined processing in accordance with the data supplied from the CPU 29.

When data exchange is performed between devices having a plurality of different formats, a corresponding IC card is inserted, and the same effect as described above can be obtained.

In the fifth and sixth embodiments, data exchange is performed between the personal computer and the office computer. However, the present invention can be performed between devices having different data formats. Furthermore, in the fifth and sixth embodiments, data exchange is normally performed. However, confidential ID number may be stored in the ROM of the IC chip section. In this case, data exchange is only performed when the operator types the corresponding confidential ID number at a keyboard. In the first to fourth embodiments, the IC card 19 and the floppy disk 23 are physically transported by the operator to the data conversion apparatus 3. However, the password, the encryption/decryption key and the encrypted transaction data may be transmitted to the data conversion apparatus in accordance with an on-line system. In the above embodiments, the encryption/decryption key or encrypting/decrypting program is stored in the IC card 19. However, any encryption factor may be stored. In addition to these modifications, the encrypted data is stored in the floppy disk, but may be stored in a magnetic tape, a cartridge, a disk pack, a magnetic card, laser card or the like.

## Claims

1. A data protection system in a data communication system for performing data communication between a first data processor (1) and a second data processor (3), comprising a portable data storage processing medium means (19),
   characterized in that
   - said portable data storage processing medium means (19 stores an encrypting and decrypting program and encrypting/decrypting factors and encrypts data from said first data processor (1) in accordance with an encrypting factor and decrypts the encrypted data in accordance with a decrypting factor,
- both said first and second data processor (1, 3) comprise means (37) for receiving the encrypting factor from the portable data storage processing medium means (19) and encrypting means (39) for encrypting data in accordance with the encrypting factor supplied thereto, and data storage medium means (23) are provided for storing data encrypted by said encrypting means (39),
- said first data processor (1) transmits the encrypted data from said protable data storage processing medium means (19) to said second data processor (3), and
- said portable data storage processing medium means (19) is conveyed to said second data processor (3) to decrypt the encrypted data in accordance with the decrypting factor.

2. A data protection system according to claim 1, characterized in that
- said portable data storage processing means (19) further stores a password,
- said first data processor (1) is provided with a password input means for entering a password and sends the password to said portable data storage processing means (19), said portable data storage means (19) being provided with a comparing means for comparing the password entered at said password input means with the stored password,
- said portable data storage processing means (19) encrypts the data from said first data processor (1) and the password when a coincidence between the password is established,
- said second data processor (3) is provided with second password input means for entering the password, and compares the password entered at said second password input means with the stored password,
- said portable data storage processing means (19) decrypts the encrypted data when a coincidence between the passwords is established, and
- said second data processor (3) reads the password from said portable data storage processing means (19), compares the read out password with the decrypted password, and produces the decrypted data when a coincidence between the passwords is established.

3. A protection system according to claim 1, characterized in that
- said first data processor (1) is provided with first password input means for entering the password,
- said portable data storage processing means (19) further stores a password, for comparing the password entered at said first password input means with the stored password, and for encrypting the data from said first data processor (1) and the password when a coincidence between the passwords is established,
- said first-data processor (1) transmits the encrypted data and the encrypted password to said second data processor (3),
- said second data processor (3) is provided with second password input means for entering the password,
- said portable data storage processing means (19) compares the password entered at said second password input means with the stored password, for decrypting the encrypted data and the encrypted password when a coincidence between the passwords is established, and for comparing the stored password with the decrypted password, and
- said second data processor (3) producing the decrypted data when a coincidence between the passwords is established.

4. A data protection system according to claim 1, characterized in that
- said first and second data processors (1, 3) communicate with each other in different data formats; and
- said portable data storage processing unit (19) stores a format conversion program, receives data from said first data processor (1), format-converts the data, and supplies the format-converted data to said second data processor (3).

5. A protection system according to claim 1, characterized in that said encrypting/decrypting factor comprises an encryption/decryption key.

6. A protection system according to claim 1, characterized in that said encrypting/decrypting factor comprises an encrypting/decrypting program having a predetermined algorithm.

7. A protection system according to claim 1, characterized in that said encrypting/decrypting factor comprises a predetermined execution condition.


**Revendications**

1. Système de protection de données dans un système de transmission de données pour exécuter une transmission de données entre un premier processeur de données (1) et un deuxième processeur de données (3), comprenant un moyen à support de mémoire et de traitement de données portable (19), caractérisé en ce que:
ledit moyen à support de mémoire et de traitement de données portable (19) mémorise un programme de chiffrement et de déchiffrement et des facteurs de chiffrement/déchiffrement et chiffre des données provenant du premier processeur de données (1) selon un facteur de chiffrement et déchiffre les données chiffrées selon un facteur de déchiffrement,
lesdits premier et deuxième processeurs de données (1,3) comprennent un moyen (37) pour recevoir le facteur de chiffrement du moyen à support de mémoire et de traitement de données portable (19) et un moyen de chiffrement (39) pour chiffrer des données selon le facteur de chiffrement qui lui est fourni, et un moyen à support de mémoire de données (23) prévu pour mémoriser les données chiffrées par ledit moyen de chiffrement (39),
ledit premier processeur de données (1) transmet les données chiffrées provenant dudit moyen à support de mémoire et de traitement de données portable (19) audit deuxième processeur de données (3), et
ledit moyen à support de mémoire et de traitement de données portable (19) est transporté jusqu'audit deuxième processeur de données (3) pour déchiffrer les données chiffrées selon le facteur de déchiffrement.

2. Système de protection de données selon la revendication 1, caractérisé en ce que
ledit moyen à support de mémoire et de traitement de données portable (19) mémorise en outre un mot de passe,
ledit premier processeur de données (1) est pourvu d'un moyen d'entrée de mot de passe pour entrer un mot de passe et envoie le mot de passe audit moyen à support de mémoire et de traitement de données portable (19), ledit moyen à support de mémoire et de traitement de données portable (19) étant pourvu d'un moyen comparateur pour comparer le mot de passe entré par ledit moyen d'entrée de mot de passe au mot de passe mémorisé,
ledit moyen à support de mémoire et de traitement de données portable (19) chiffre les données provenant dudit premier processeur de données (1) et le mot de passe quand une coïncidence est établie entre les mots de passe,
ledit deuxième processeur de données (3) est pourvu d'un deuxième moyen d'entrée de mot de passe pour entrer le mot de passe, et compare le mot de passe entré par ledit deuxième moyen d'entrée de mot de passe au mot de passe mémorisé,
ledit moyen à support de mémoire et de traitement de données portable (19) déchiffre les données chiffrées quand une coïncidence est établie entre les mots de passe, et
ledit deuxième processeur de données (3) lit le mot de passe provenant dudit moyen à support de mémoire et de traitement de données portable (19), compare le mot de passe lu au mot de passe déchiffré, et produit les données déchiffrées quand une coïncidence est établie entre les mots de passe.

3. Système de protection de données selon la revendication 1, caractérisé en ce que
ledit premier processeur de données (1) est pourvu d'un premier moyen d'entrée de mot de passe pour entrer le mot de passe,
ledit moyen à support de mémoire et de traitement de données portable (19) mémorise en outre un mot de passe, pour comparer le mot de passe entré par ledit premier moyen d'entrée de mot de passe au mot de passe mémorisé, et pour chiffrer les données provenant dudit premier processeur de données (1) et le mot de passe quand une coïncidence est établie entre les mots de passe,
ledit premier processeur de données (1) transmet les données chiffrées et le mot de passe chiffré audit deuxième processeur de données (3),
ledit deuxième processeur de données (3) est pourvu d'un deuxième moyen d'entrée de mot de passe pour entrer le mot de passe,
ledit moyen à support de mémoire et de traitement de données portable (19) compare le mot de passe entré par ledit deuxième moyen d'entrée de mot de passe au mot de passe mémorisé, pour déchiffrer les données chiffrées et le mot de passe chiffré quand une coïncidence est établie entre les mots de passe, et pour comparer le mot de passe mémorisé au mot de passe déchiffré, et

ledit deuxième processeur de données (3) produisant les données déchiffrées quand une coïncidence est établie entre les mots de passe.

4. Système de protection de données selon la revendication 1, caractérisé en ce que lesdits premier et deuxième processeurs de données (1,3) communiquent entre eux dans différents formats de données; et ledit moyen à support de mémoire et de traitement de données portable (19) mémorise un programme de conversion de format, reçoit les données provenant dudit premier processeur de données (1), convertit en format les données, et fournit les données converties en format audit deuxième processeur de données (3).

5. Système de protection de données selon la revendication 1, caractérisé en ce que ledit facteur de chiffrement/déchiffrement est constitué par une clé de chiffrement/déchiffrement.

6. Système de protection de données selon la revendication 1, caractérisé en ce que ledit facteur de chiffrement/déchiffrement est constitué par un programme de chiffrement/déchiffrement comportant un algorithme prédéterminé.

7. Système de protection de données selon la revendication 1, caractérisé en ce que ledit facteur de chiffrement/déchiffrement est constitué par une condition d'exécution prédéterminée.

**Ansprüche**

1. Datenschutzsystem in einem Datenkommunikations- bzw. -übertragungssystem zum Durchführen einer Datenkommunikation bzw. -ubertragung zwischen einem ersten Datenprozessor (1) und einem zweiten Datenprozessor (3), mit einer tragbaren Datenspeicherverarbeitungsmediumeinrichtung (19), dadurch gekennzeichnet, daß
   - die tragbare Datenspeicherverarbeitungsmediumeinrichtung (19) ein Verschlüsselungs- und Entschlüsselungsprogramm und Verschlüsselungs/Entschlüsselungsfaktoren speichert und Daten vom ersten Datenprozessor (1) gemäß einem Verschlüsselungsfaktor verschlüsselt und die verschlüsselten Daten gemäß einem Entschlüsselungsfaktor entschlüsselt,

   - der erste und der zweite Datenprozessor (1, 3) beide eine Einrichtung (37) zum Empfangen des Verschlüsselungsfaktors von der tragbaren Datenspeicherverarbeitungsmediumeinrichtung (19) und eine Verschlüsselungseinrichtung (39) zum Verschlüsseln von Daten gemäß dem dort eingespeisten Verschlüsselungsfaktor aufweisen und Datenspeichermediumeinrichtungen (23) zum Speichern der durch die Verschlüsselungseinrichtung (39) verschlüsselten Daten vorgesehen sind,
   - der erste Datenprozessor (1) die verschlüsselten Daten von der tragbaren Datenspeicherverarbeitungsmediumeinrichtung (19) zum zweiten Datenprozessor (3) überträgt und
   - die tragbare Datenspeicherverarbeitungsmediumeinrichtung (19) zum zweiten Datenprozessor (3) gefördert ist, um die verschlüsselten Daten gemäß dem Entschlüsselungsfaktor zu entschlüsseln.

2. Datenschutzsystem nach Anspruch 1, dadurch gekennzeichnet, daß
   - die tragbare Datenspeicherverarbeitungseinrichtung (19) außerdem ein Kennwort speichert,
   - der erste Datenprozessor (1) mit einer Kennworteingabeeinrichtung zum Eingeben eines Kennwortes versehen ist und das Kennwort zu der tragbaren Datenspeicherverarbeitungseinrichtung (19) speist, wobei die tragbare Datenspeichereinrichtung (19) mit einer Vergleichseinrichtung zum Vergleichen des an der Kennworteingabeeinrichtung eingegebenen Kennwortes mit dem gespeicherten Kennwort versehen ist,
   - die tragbare Datenspeicherverarbeitungseinrichtung (19) die Daten von dem ersten Datenprozessor (1) und das Kennwort verschlüsselt, wenn eine Übereinstimmung zwischen dem Kennwort festgestellt wird,
   - der zweite Datenprozessor (3) mit einer zweiten Kennworteingabeeinrichtung zum Eingeben des Kennwortes versehen ist und das an der zweiten Kennworteingabeeinrichtung eingegebene Kennwort mit dem gespeicherten Kennwort vergleicht,
   - die tragbare Datenspeicherverarbeitungseinrichtung (19) die verschlüsselten Daten entschlüsselt, wenn eine Übereinstimmung zwischen den Kennworten festgestellt wird, und
   - der zweite Datenprozessor (3) das Kenn-

wort aus der tragbaren Datenspeicherver-
arbeitungseinrichtung (19) liest, das aus-
gelesene Kennwort mit dem entschlüs-
selten Kennwort vergleicht und die ent-
schlüsseltenDaten erzeugt, wenn eine
Übereinstimmung zwischen den Kennworten festgestellt wird.

3. Schutzsystem nach Anspruch 1, dadurch gekennzeichnet, daß

- der erste Datenprozessor (1) mit einer
ersten Kennworteingabeeinrichtung zum
Eingeben des Kennwortes versehen ist,

- die tragbare Datenspeicherverarbeitungseinrichtung (19) weiterhin ein Kennwort
speichert, um das an der ersten Kennworteingabeeinrichtung eingegebene
Kennwort mit dem gespeicherten Kennwort zu vergleichen und um die Daten
von dem ersten Datenprozessor (1) und
das Kennwort zu verschlüsseln, wenn
eine Übereinstimmung zwischen den
Kennworten festgestellt wird,

- der erste Datenprozessor (1) die ver-
schlüsselten Daten und das verschlüssel-
te Kennwort zu dem zweiten Datenprozessor (3) überträgt,

- der zweite Datenprozessor (3) mit einer
zweiten Kennworteingabeeinrichtung zum
Eingeben des Kennwortes vorgesehen
ist,

- die tragbare Datenspeicherverarbeitungseinrichtung (19) das an der zweiten
Kennworteingabeeinrichtung eingegebene Kennwort mit dem gespeicherten
Kennwort vergleicht, um die verschlüsselten Daten und das verschlüsselte
Kennwort zu entschlüsseln, wenn eine
Übereinstimmung zwischen den Kennworten festgestellt wird, und um das ge-
speicherte Kennwort mit dem entschlüs-
selten Kennwort zu vergleichen, und

- der zweite Datenprozessor (3) die entschlüsselten Daten erzeugt, wenn eine
Übereinstimmung zwischen den Kennworten festgestellt wird.

4. Datenschutzsytem nach Anspruch 1, dadurch
gekennzeichnet, daß

- der erste und der zweite Datenprozessor
(1, 3) miteinander in verschiedenen Datenformaten kommunizieren, und

- die tragbare Datenspeicherverarbeitungs-
einheit (19) ein Formatumsetzungspro-
gramm speichert, Daten von dem ersten
Datenprozessor (1) empfängt, die Daten
im Format umsetzt und die im Format
umgesetzten Daten zum zweiten Datenprozessor (3) speist.

5. Schutzsystem nach Anspruch 1, dadurch gekennzeichnet,            daß            der
Verschlüsselungs/Entschlüsselungsfaktor einen
Verschlüsselungs/Entschlüsselungsschlüssel
aufweist.

6. Schutzsystem nach Anspruch 1, dadurch gekennzeichnet,            daß            der
Verschlüsselungs/Entschlüsselungsfaktor ein
Verschlüsselungs/Entschlüsselungsprogramm
mit einem vorbestimmten Algorithmus aufweist.

7. Schutzsystem nach Anspruch 1, dadurch gekennzeichnet,            daß            der
Verschlüsselungs/Entschlüsselungsfaktor eine
vorbestimmte Ausführungsbedingung aufweist.

# F I G. 1

# F I G. 2

EP 0 114 368 B1

# F I G. 3

| | |
|---|---|
| MAGNETIC STRIPE | 25 |
| | 19 |
| | IC CHIP — 27 |
| EMBOSSED PORTION | |

# F I G. 4

31          33

ROM        RAM

CPU — 29

CONTACTING
PORTION — 35

# F I G. 5

F I G. 6